# NEUE EUROPÄISCHE PATENTSCHRIFT

(11) **EP 3 717 783 B2**
(45) Veröffentlichungstag und Bekanntmachung des Hinweises auf die Entscheidung über den Einspruch: **28.10.2026**
(45) Hinweis auf die Patenterteilung: 27.10.2021
(21) Anmeldenummer: 19709702.5
(22) Anmeldetag: 06.03.2019
(51) Int. Cl.: F04D 27/00, F04D 29/42, G01F 1/115

(54) **HALTEVORRICHTUNG FÜR EIN ANEMOMETER SOWIE RADIALGEBLÄSE**
RETAINING DEVICE FOR AN ANEMOMETER AND RADIAL FAN
DISPOSITIF DE MAINTIEN POUR UN ANÉMOMÈTRE ET VENTILATEUR RADIAL

(30) Priorität: 03.05.2018 DE 102018110618
(43) Veröffentlichungstag der Anmeldung: 07.10.2020
(73) Patentinhaber: ebm-papst Mulfingen GmbH & Co. KG, 74673 Mulfingen (DE)
(72) Erfinder: GEBERT, Daniel, 74613 Öhringen (DE); HELI, Thomas, 74595 Langenburg (DE); RIEGLER, Peter, 97944 Boxberg (DE); SCHAAF, Valerius, 74635 Kupferzell (DE)
(74) Vertreter: Staeger & Sperling Partnerschaftsgesellschaft mbB
(86) Internationale Anmeldenummer: PCT/EP2019/055615
(87) Internationale Veröffentlichungsnummer: WO 2019/211027

(56) Entgegenhaltungen:
- DE-A1- 102016 115 615
- US-A- 3 244 002
- US-A- 4 089 215
- US-A- 4 715 234
- US-A1- 2009 320 608

## Beschreibung

Die Erfindung betrifft eine Haltevorrichtung für ein Anemometer zum Einsatz insbesondere in einem Radialgebläse sowie das Radialgebläse mit einer entsprechenden Haltevorrichtung mit Anemometer.

Die Verwendung eines Anemometers bei Gebläsen ist grundsätzlich bekannt, beispielsweise wird in der DE 10 2016 115 615 A1 ein Radialgebläse mit Flügelradanemometer am Ausblasabschnitt offenbart, wobei die Drehzahl des Flügelradanemometers erfasst und als Signal durch eine Steuerung verarbeitet wird, um auf den geförderten Luftvolumenstrom zu schließen. Die Anwendung bei der vorliegenden Erfindung ist vorzugsweise identisch. Die Messung und der erfasste Messwert des geförderten Luftvolumentstromes sind für die Regelung des Gebläses relevant. Deshalb sollte die Messgenauigkeit so hoch wie möglich sein. Gleichzeitig sollte der Aufwand bezüglich Teilezahl und Messwerterfassung aus ökonomischen Gründen begrenzt bleiben.

Das Anemometer wird im Stand der Technik über einen Ring an dem Gebläsegehäuse befestigt, wobei jedoch Teile des Rings in der Strömung liegen und diese vor der Beaufschlagung des Anemometers beeinträchtigen. Der Erfindung liegt deshalb die Aufgabe zugrunde, eine Haltevorrichtung für ein Anemometer zum Einsatz in einem Gebläse bereitzustellen, welche die Messgenauigkeit des durch das Anemometer gemessenen, von dem Gebläse erzeugten Luftvolumenstromes erhöht, ohne die Strömung negativ zu beeinflussen.

Diese Aufgabe wird durch die Merkmalskombinationen gemäß der unabhängigen Patentansprüche 1, 2 und 5 gelöst.

Erfindungsgemäß wird eine Haltevorrichtung für ein Anemometer zum Einsatz an einem Gebläsegehäuse eines Gebläses vorgeschlagen. Die Haltevorrichtung ist als Strömungsgleichrichter mit mehreren durch eine Steganordnung in eine Wabenstruktur aufgeteilten axialen Strömungskanälen ausgebildet und weist Haltemittel auf, über die das Anemometer axial an die Strömungskanäle angrenzend an die Haltevorrichtung befestigbar ist, und wobei die Steganordnung durch Radialstreben und Umfangsstreben gebildet ist.

Durch die als Strömungsgleichrichter ausgebildete Haltevorrichtung für das Anemometer kann insbesondere eine drallbehaftete von dem Gebläse erzeugte Strömung ausgerichtet und damit die Messgenauigkeit des Luftvolumenstromes durch das Anemometer verbessert werden. Auch wird die Geräuschentwicklung reduziert. Zudem dient die Haltevorrichtung gleichzeitig als Halterung für das Anemometer, so dass die Haltevorrichtung und das Anemometer zusammen als Baueinheit in dem Gebläse verbaut werden können. Gesonderte Trägerelemente, die zur Fixierung des Anemometers an dem Gebläse herangezogen werden, können entfallen.

Als Haltemittel zur befestigenden Anordnung des Anemometers weist die Haltevorrichtung eine zentrale Nabe auf, an der das Anemometer gelagert aufgenommen wird. Das Anemometer ist vorzugsweise als Flügelrad-Anemometer ausgebildet und rotiert bei einer Anströmung durch den Luftvolumenstrom des Gebläses gegenüber der Haltevorrichtung. Aus der Rotationsgeschwindigkeit ist der tatsächliche Luftvolumenstrom ableitbar. Die Haltevorrichtung bestimmt einen kreisförmigen Scheibenkörper, der vorzugsweise in der Projektion das gesamte Flügelrad-Anemometer überdeckt.

Zur Befestigung der Haltevorrichtung an dem Gebläsegehäuse des Gebläses, insbesondere im Ausblasabschnitt, weist dieses zudem vorzugsweise Befestigungsmittel beispielsweise in Form von Vorsprüngen auf, die in entsprechende Nuten im Gebläsegehäuse eingreifen.

Die als Strömungsgleichrichter ausgebildete Haltevorrichtung erzeugt ihre die Strömung ausrichtende Wirkung über die durch die Steganordnung in eine Wabenstruktur aufgeteilten axialen Strömungskanäle. Dabei wird in einer Ausführung vorgesehen, dass die Steganordnung durch Radialstreben und Umfangsstreben gebildet ist. Die Radialstreben erstrecken sich vorzugsweise von dem axialen Zentrum, d.h. der Mittelachse der Haltevorrichtung nach radial außen, die Umfangsstreben verlaufen vorzugsweise kreisförmig in Umfangsrichtung. Durch die Schnittpunkte der Radialstreben und der Umfangsstreben werden die einzelnen, voneinander getrennten und in Radial- und in Umfangsrichtung aneinander angrenzenden Strömungskanäle erzeugt, die zusammen in einer axialen Draufsicht gesehen die Wabenstruktur bilden.

Dabei ist eine Ausführung günstig, bei der sich eine erste Anzahl der Radialstreben von einer Mittelachse der Haltevorrichtung über mehrere Umfangsstreben hinweg und eine weitere Anzahl der Radialstreben nur zwischen radial benachbarten Umfangsstreben erstrecken. Vorzugsweise verlaufen einige Radialstreben über die gesamte Radialerstreckung der Haltevorrichtung, d.h. von ihrer zentralen Mittelachse durchgängig bis zu ihrem Außendurchmesser. Zusätzliche Radialstreben werden zwischen jeweils zwei in radialer Richtung aneinander angrenzenden Umfangsstreben vorgesehen, welche die Haltevorrichtung stärker segmentieren.

Bei einer strömungstechnisch vorteilhaften Ausführungsvariante der Haltevorrichtung verlaufen die Radialstreben in eine Umfangsrichtung bogenförmig gekrümmt. Vorzugsweise ist dabei die Krümmung aller Radialstreben identisch oder im Wesentlichen identisch.

Bei der Haltevorrichtung wird vorteilhafter die Anzahl n der Umfangsstreben in Abhängigkeit von ihrer Außenabmessung bestimmt durch die Formel n=Da/X, wobei X in einem Wertebereich von 20 bis 80, insbesondere 35 bis 60 liegt und Da dem Wert in Millimetern des Durchströmungsdurchmessers der Haltevorrichtung entspricht. Die Anzahl n wird dabei auf eine ganze Zahl gerundet. Der Durchströmungsdurchmesser wird bestimmt durch den durchströmbaren Abschnitt der Haltevorrichtung.

Bei der Haltevorrichtung wird in einer strömungstechnisch günstigen Ausführung vorgesehen, dass ihre axiale Längenerstreckung im Bereich der Strömungskanäle konstant ist.

Die Strömungskanäle im radial äußeren Bereich beeinflussen die Strömung stärker als im Zentrumsbereich um die Mittelachse der Haltevorrichtung. In einer Weiterbildung ist deshalb vorgesehen, dass die an die Mittelachse der Haltevorrichtung angrenzenden zentralen Strömungskanäle eine größere maximale Durchströmungsquerschnittsfläche aufweisen als die radial weiter außen liegenden Strömungskanäle.

Ferner ist eine Ausgestaltung der Haltevorrichtung dadurch gekennzeichnet, dass die Umfangsstreben ringförmig geschlossen sind und die Haltevorrichtung in mehrere radial aneinander angrenzende Ringsegmente unterteilen. Die Anzahl der Ringsegmente ergibt sich über die Anzahl der Umfangsstreben, welche wiederum durch die vorstehende Formel n= Da/X festlegbar ist. Soweit die Haltevorrichtung rund ausgebildet ist, ist sie vorzugsweise von einem den Außenradius der Haltevorrichtung bildenden Tragring umschlossen. Über den Tragring ist die Haltevorrichtung auch innerhalb des Ausblasabschnitts des Gebläses festlegbar.

Im durchströmbaren Bereich der Strömungskanäle ist in einer weiteren Ausführung vorgesehen, dass die mittlere axiale Längenerstreckung der Haltevorrichtung größer ist als eine mittlere Umfangslänge der Strömungskanäle im radial äußersten Ringsegment.

Die mittlere axiale Länge t1 des radial äußersten Ringsegments wird vorzugsweise in Abhängigkeit der durchströmbaren Querschnittsfläche A1 der Strömungskanäle im radial äußersten Ringsegment mit der Formel definiert t1=A1^{1/2}·Z, wobei Z in einem Wertebereich von 0,8 bis 2, insbesondere 1,1 bis 1,4 liegt.

Ferner wird bei der Haltevorrichtung vorteilhafterweise vorgesehen, dass die Anzahl der Radialstreben in den radial äußeren Ringsegmenten um ein ganzzahliges Vielfaches höher ist als in dem radial innersten Ringsegment, das an die Mittelachse der Haltevorrichtung angrenzt. Beispielsweise können in dem ersten achszentral liegenden Ringsegment 7, in dem zweiten radial außen angrenzenden Ringsegment 14, in dem dritten radial außen angrenzenden Ringsegment 28 Radialstreben in Umfangsrichtung verteilt verlaufen und mit den Umfangsstreben die einzelnen Strömungskanäle bilden.

Die Haltevorrichtung ist in einer Ausgestaltung dadurch gekennzeichnet, dass eine Ringsegment-Querschnittsfläche (Am) des inneren achszentralen Ringsegments zu der Ringsegment-Querschnittsfläche (Am-1) des jeweils radial außen angrenzenden Ringsegments zunimmt, wobei Am=Y·Aₘ₋₁ mit 1,1≤Y≤2,5, insbesondere 1,2≤Y≤2,0. Die Ringsegment-Querschnittsfläche wird dabei durch die gesamte Fläche zwischen jeweils zwei angrenzenden Umfangsstreben bzw. durch die Querschnittsfläche innerhalb der achszentralen ersten Umfangsstrebe bestimmt, ohne dass die Radialstreben berücksichtigt sind. Die Radialstreben unterteilten die Ringsegmente, wobei die durchströmbare Querschnittsfläche jedes einzelnen Strömungskanals vorzugsweise mit jedem Ringsegment nach radial außen abnimmt, da die Anzahl der Radialstreben ansteigt. Das bedeutet, dass trotz der Vergrößerung der Ringsegment-Querschnittsfläche nach radial außen die Querschnittsfläche jedes einzelnen Strömungskanals durch die erhöhte Anzahl an Radialstreben gegenüber den Strömungskanälen in radial weiter innen liegenden Ringsegmenten verkleinert wird.

Die Erfindung umfasst auch eine Ausbildung der vorstehend beschriebenen Haltevorrichtung mit einem daran befestigen Flügelrad-Anemometer als Baueinheit zum Einsatz in einem Gebläse, insbesondere einem Radialgebläse. Das Flügelrad-Anemometer wird hierzu an der Haltevorrichtung befestigt, so dass beide Teile als Baueinheit montierbar, lieferbar oder nachrüstbar sind.

Zudem umfasst die Erfindung ein Radialgebläse mit einem einen Ausblasabschnitt aufweisenden Gebläsegehäuse, an dem die vorstehend beschriebene Haltevorrichtung fixiert ist. An der Haltevorrichtung ist dabei in axialer Strömungsrichtung unmittelbar angrenzend das Anemometer angeordnet und über die Haltemittel an der Haltevorrichtung befestigt. Das Radialgebläse weist im Übrigen die in der Technik bekannte Konstruktion mit einem Gebläserad, einer axialer Ansaugöffnung und einer in Umfangsrichtung ausgerichteten Ausblasöffnung auf. Das Gebläsegehäuse ist vorzugsweise spiralförmig. Das Radialgebläse erzeugt über das Gebläserad den Luftvolumenstrom, der durch die als Strömungsgleichrichter ausgebildete und am Ausblasabschnitt angeordnete Haltevorrichtung gefördert wird.

Bei dem Radialgebläse wird in axialer Strömungsrichtung gesehen die als Strömungsgleichrichter ausgebildete Haltevorrichtung dem Anemometer vorgeschaltet angeordnet, so dass der Luftvolumenstrom zunächst durch den Strömungsgleichrichter und anschließend auf das Anemometer trifft.

Eine vorteilhafte Ausgestaltung sieht bei dem Radialgebläse vor, dass das Anemometer als Flügelrad-Anemometer mit mehreren in Umfangsrichtung beabstandet angeordneten Flügelradschaufeln ausgebildet ist und die Flügelradschaufeln in einer entgegengesetzter Umfangsrichtung zu den Radialstreben der Haltevorrichtung bogenförmig gekrümmt sind.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht auf eine Haltevorrichtung mit rückseitig angeschlossenem Anemometer;
- Fig. 2: eine axiale Draufsicht auf die Haltevorrichtung aus Fig. 1;
- Fig. 3: eine perspektivische Rückansicht auf die Ausströmseite der Haltevorrichtung aus Fig. 1 mit nachgeschaltetem Anemometer als Baueinheit,
- Fig. 4: die Haltevorrichtung und das Anemometer aus Fig. 3 teilweise aufgeschnitten;
- Fig. 5: eine seitliche Schnittansicht auf die Haltevorrichtung aus Fig. 1;
- Fig. 6: eine alternative Ausführung der Haltevorrichtung aus Figur 1 angeschlossen an einem Radialgebläse.

Gleiche Bezugszeichen benennen gleiche Teile in allen Ansichten.

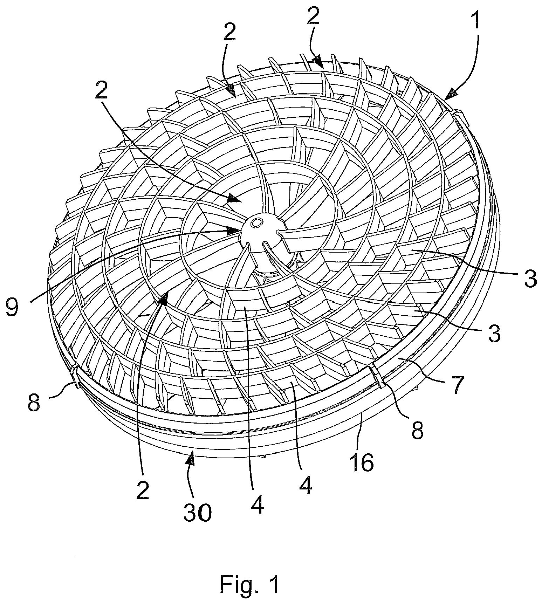

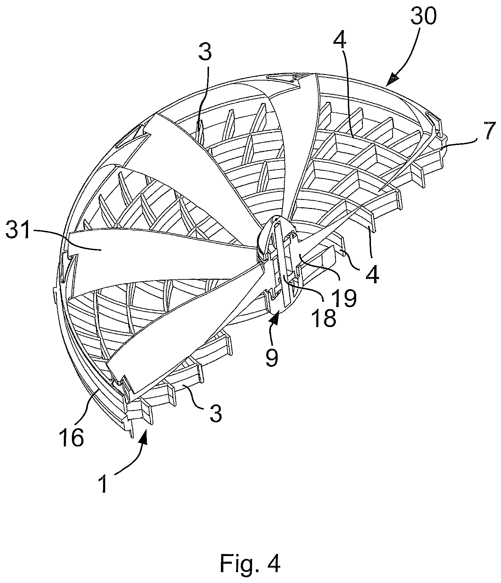

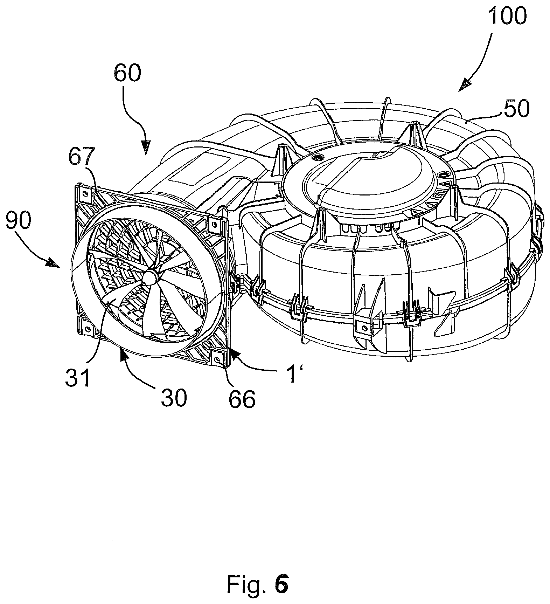

In den Figuren 1 bis 5 ist eine erste Ausführung einer als Strömungsgleichrichter ausgebildeten Haltevorrichtung 1 gezeigt, die teils zusammen mit einem daran befestigen Flügelrad-Anemometer 30 als Baueinheit 90 dargestellt ist, siehe Figuren 1 bis 4. Die Haltevorrichtung 1 bzw. die Baueinheit 90 aus Haltevorrichtung 1 und Flügelrad-Anemometer 30 wird an einen Ausblasabschnitt 60 eines Radialgebläses 100 angeordnet, wie es beispielsweise in Figur 6 gezeigt ist. Alternativ wird die Haltevorrichtung 1 bzw. die Baueinheit 90 aus Haltevorrichtung 1 und Flügelrad-Anemometer 30 innerhalb des Ausblasabschnitts 60 eingesetzt und an der Innenwand des Gebläsegehäuses 50 befestigt.

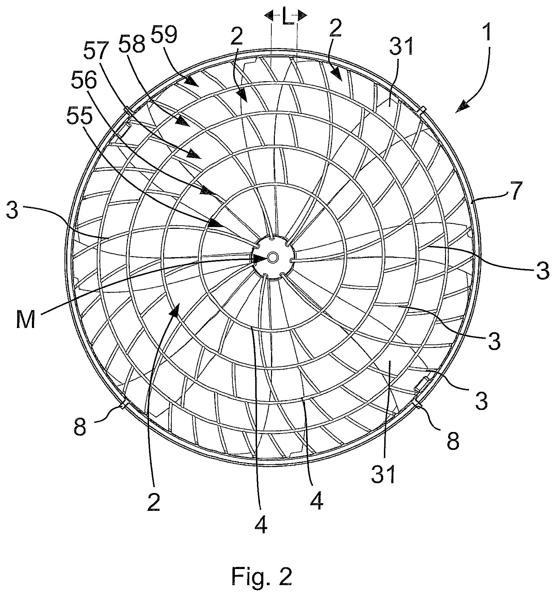

In den Figuren 1 und 2 ist die Haltevorrichtung 1 in einer runden Ausführung von ihrer Einströmseite dargestellt. Zwischen dem umlaufenden Tragring 7 und der die Mittelachse M umfassenden achszentralen Aufnahme 9 ist über vier ringförmig geschlossene Umfangsstreben 4 und sieben durchgängige sowie einer Vielzahl von sich über einen radialen Teilabschnitt erstreckenden Radialstreben 3 die Steganordnung gebildet, über welche die Haltevorrichtung 1 in radialer und in Umfangsrichtung wabenstrukturartig benachbarte Strömungskanäle 2 bildet. Die Umfangsstreben 4 unterteilen die Haltevorrichtung 1 in mehrere radial aneinander angrenzende Ringsegmente 55, 56, 57, 58, 59, deren jeweilige Ringsegment-Querschnittsfläche nach radial außen hin zunimmt. Gleichzeitig erhöht sich die Anzahl der Radialstreben 3 von Ringsegment zu Ringsegment nach radial außen um ein ganzes Vielfaches, d.h. im ersten Ringsegment sind sieben Radialstreben 3, im zweiten Ringsegment vierzehn Radialstreben 3, im dritten Ringsegment 59 sind einundzwanzig Radialstreben 3, bis hin zum fünften Ringsegment 59, in dem zweiundvierzig Radialstreben 3 angeordnet sind. Die Erhöhung der Anzahl der Radialstreben 3 reduziert die Durchströmungsfläche der Strömungskanäle 2, so dass die jeweilige Durchströmungsfläche der Strömungskanäle 2 von Ringsegment zu Ringsegment nach radial außen hin abnimmt. Die radial nicht durchgängigen Radialstreben 3 verlaufen in der gezeigten Ausführung stets ausschließlich zwischen zwei benachbarten Umgangsstreben 4. Alle Radialstreben 3 sind bogenförmig gekrümmt, von der Ausströmseite gemäß Fig. 1 gesehen entgegen dem Uhrzeigersinn.

Am Außenumfangsrand des Tragrings 7 sind mehrere Vorsprünge 8 ausgebildet, über die der Tragring 7 und mithin die Haltevorrichtung 1 an der Innenwand des Gebläsegehäuses 50, beispielsweise auch desjenigen aus Figur 6 befestigbar ist.

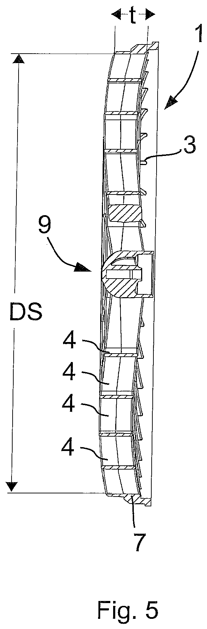

Bezugnehmend auf Figur 5 ist die Haltevorrichtung 1 in einer seitlichen Schnittansicht dargestellt, um zu zeigen, dass gemäß dieser Ausführung die mittlere axiale Längenerstreckung t der Haltevorrichtung t im Bereich der Strömungskanäle 2 über die Radialerstreckung der Haltevorrichtung 1 konstant ist. Sowohl die Radialstreben 3 als auch die Umfangsstreben 4 erstrecken sich jeweils stegartig über die gesamte axiale Längenerstreckung t. Zudem ist der Durchströmungsdurchmesser DS der Haltevorrichtung 1 gekennzeichnet. Unter Bezugnahme auf Figur 2 ist zu erkennen, dass die mittlere axiale Längenerstreckung t der Haltevorrichtung 1 im Bereich der Strömungskanäle 2 größer ist als die mittlere Umfangslänge L der Strömungskanäle 2 im radial äußersten Ringsegment 59, so dass gilt t>L.

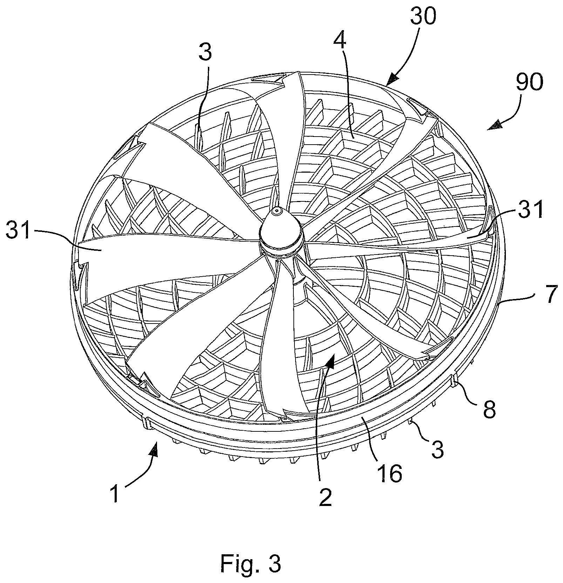

Da an der Haltevorrichtung 1 gemäß der Figuren 1 - 4 stets das Flügelrad-Anemometer 30 befestigt ist, können die Haltevorrichtung 1 und das das Flügelrad-Anemometer 30 als Baueinheit 90 gesehen werden, die beispielsweise in dem Radialgebläse gemäß Figur 6 einsetzbar ist. Das Flügelrad-Anemometer 30 weist mehrere in Umfangsrichtung beabstandete Flügelradschaufeln 31 auf, die in Umfangsrichtung bogenförmig gekrümmt sind, wobei die Krümmungsrichtung derjenigen der Radialstreben 3 entgegengesetzt verläuft, wie es z.B. in Figur 2 und 3 gut zu erkennen ist. Ferner umfasst das Flügelrad-Anemometer 30 einen Umfangsring 16, der bezüglich seines Außenradius im Wesentlichen dem Tragring 7 entspricht und auf diesen aufgesetzt bzw. radial innenseitig oder außenseitig an diesen befestigend angesetzt wird. Die Flügelradschaufeln 31 treffen im Zentrum an einer Nabe 19 zusammen und sind über eine Achse 18 gelagert an der Aufnahme 9 der Haltevorrichtung 1 befestigend angeordnet, so dass die Flügelradschaufeln 31 relativ zur Haltevorrichtung 1 und zum Umfangsring 16 rotieren können.

Figur 6 zeigt ein Radialgebläse 100 mit spiralförmigen Gebläsegehäuse 50, das den Ausblasabschnitt 60 umfasst. Außenseitig an dem Ausblasabschnitt 60 ist eine alternative quadratische Ausführung der Haltevorrichtung 1' mit daran befestigtem Flügelrad-Anemometer 30 fixiert, die zusammen wieder als Baueinheit 90 montierbar sind. Alle vorstehend diskutierten Merkmale gelten auch für die Ausführung der Haltevorrichtung 1', die lediglich über den Umfangsring 16 des Flügelrad-Anemometer 30 hinaus vorsteht und in den die quadratische Form bestimmenden Außenrandabschnitten vier Fixierpunkte 66 bestimmt, über die das Radialgebläse 100 an seinem einsatzort befestigbar ist. In den Außenrandabschnitten verlaufen mehrere parallele Streben 67 geradlinig nach radial außen.

## Patentansprüche

1. Baueinheit (90) aus einer Haltevorrichtung (1) mit einem daran befestigen Flügelrad-Anemometer (30) zum Einsatz in einem Gebläse (100),
wobei die Haltevorrichtung (1) für das Anemometer (30) und zum Einsatz an einem Gebläsegehäuse (50) des Gebläses (100) ausgebildet ist,
wobei die Haltevorrichtung (1) Haltemittel aufweist, über die das Anemometer (30) axial an die Strömungskanäle (2) angrenzend an die Haltevorrichtung (1) befestigbar ist,
wobei die Haltevorrichtung (1) als Strömungsgleichrichter mit mehreren durch eine Steganordnung in eine Wabenstruktur aufgeteilten axialen Strömungskanälen (2) ausgebildet ist, und
die Steganordnung durch Radialstreben (3) und Umfangsstreben (4) gebildet ist.

2. Radialgebläse (100) mit einem Gebläsegehäuse (50),
das einen Ausblasabschnitt (60) aufweist,
wobei eine Haltevorrichtung (1) an dem Ausblasabschnitt (60) des Gebläsegehäuses (50) fixiert ist,
wobei die Haltevorrichtung (1) für ein Anemometer (30) und zum Einsatz an einem Gebläsegehäuse (50) des Gebläses (100) ausgebildet ist,
wobei die Haltevorrichtung (1) Haltemittel aufweist, über die das Anemometer (30) axial an die Strömungskanäle (2) angrenzend an die Haltevorrichtung (1) befestigbar ist,
wobei die Haltevorrichtung (1) als Strömungsgleichrichter mit mehreren durch eine Steganordnung in eine Wabenstruktur aufgeteilten axialen Strömungskanälen (2) ausgebildet ist,
die Steganordnung durch Radialstreben (3) und Umfangsstreben (4) gebildet ist und
an der Haltevorrichtung (1) in axialer Strömungsrichtung unmittelbar angrenzend das Anemometer (30) angeordnet und über die Haltemittel an der Haltevorrichtung (1) befestigt ist.

3. Radialgebläse nach dem vorigen Anspruch, **dadurch gekennzeichnet, dass**
in axialer Strömungsrichtung gesehen die als Strömungsgleichrichter ausgebildete Haltevorrichtung (1) dem Anemometer (30) vorgeschaltet angeordnet ist.

4. Radialgebläse nach einem der vorigen Ansprüche 2 oder 3, **dadurch gekennzeichnet, dass**
das Anemometer (30) als Flügelrad-Anemometer mit mehreren in Umfangsrichtung beabstandet angeordneten Flügelradschaufeln (31) ausgebildet ist,
wobei die Flügelradschaufeln (31) in einer entgegengesetzter Umfangsrichtung zu den Radialstegen (3) bogenförmig gekrümmt sind.

5. Haltevorrichtung (1) für ein Flügelrad-Anemometer (30),
ausgebildet zum Einsatz an einem Gebläsegehäuse (50) eines Gebläses (100),
wobei die Haltevorrichtung (1) Haltemittel aufweist, über die das Anemometer (30) axial an die Strömungskanäle (2) angrenzend an die Haltevorrichtung (1) befestigbar ist,
**dadurch gekennzeichnet, dass** die Haltevorrichtung (1) als Strömungsgleichrichter mit mehreren durch eine Steganordnung in eine Wabenstruktur aufgeteilten axialen Strömungskanälen (2) ausgebildet ist, und dass
die Steganordnung durch Radialstreben (3) und Umfangsstreben (4) gebildet ist.

6. Haltevorrichtung nach Anspruch 5, **dadurch gekennzeichnet, dass**
sie Befestigungsmittel zur Befestigung in einem Ausblasabschnitt des Gebläsegehäuses (50) des Gebläses (100) aufweist.

7. Haltevorrichtung nach dem vorigen Anspruch, **dadurch gekennzeichnet, dass**
sich eine erste Anzahl der Radialstreben (3) von einer Mittelachse (M) der Haltevorrichtung (1) über mehrere Umfangsstreben (4) hinweg und
eine weitere Anzahl ausschließlich zwischen radial benachbarten Umfangsstreben (4) erstrecken.

8. Haltevorrichtung nach einem der vorigen Ansprüche 5 bis 7, **dadurch gekennzeichnet, dass**
die Radialstreben (3) in Umfangsrichtung bogenförmig gekrümmt verlaufen.

9. Haltevorrichtung nach einem der vorigen Ansprüche 6 bis 8, **dadurch gekennzeichnet, dass**
eine Anzahl n der Umfangsstreben (4) bestimmt wird durch n=Da/X, wobei X in einem Werteberiech von 20≤X≤80, insbesondere 35≤X≤60 liegt, Da dem Wert in Millimetern eines Durchströmungsdurchmessers (DS) der Haltevorrichtung (1) entspricht, und wobei n auf eine ganze Zahl gerundet wird.

10. Haltevorrichtung nach einem der vorigen Ansprüche 5 bis 9, **dadurch gekennzeichnet, dass**
eine axiale Längenerstreckung (t) der Haltevorrichtung (1) im Bereich der Strömungskanäle (2) über die Radialerstreckung der Haltevorrichtung (1) konstant ist.

11. Haltevorrichtung nach einem der vorigen Ansprüche 5 bis 10, **dadurch gekennzeichnet, dass**
die an eine Mittelachse (M) der Haltevorrichtung (1) angrenzenden zentralen Strömungskanäle (2) eine größere maximale Durchströmungsquerschnitts-fläche aufweisen als die radial weiter außen liegenden Strömungskanäle (2).

12. Haltevorrichtung nach einem der vorigen Ansprüche 5 bis 11, **dadurch gekennzeichnet, dass**
die Umfangsstreben (4) ringförmig geschlossen sind und die Haltevorrichtung (1) in mehrere radial aneinander angrenzende Ringsegmente (55, 56, 57, 58, 59) unterteilen.

13. Haltevorrichtung nach Anspruch 10 und 12, **dadurch gekennzeichnet, dass**
die mittlere axiale Längenerstreckung (t) der Haltevorrichtung (1) im Bereich der Strömungskanäle (2) größer ist als eine mittlere Umfangslänge (L) der Strömungskanäle (2) im radial äußersten Ringsegment (59).

14. Haltevorrichtung nach dem vorigen Anspruch, **dadurch gekennzeichnet, dass**
eine Anzahl der Radialstreben (3) in den radial äußeren Ringsegmenten (56, 57, 58, 59) um ein ganzzahliges Vielfaches höher ist als in dem radial innersten Ringsegment (55), das an die Mittelachse (M) der Haltevorrichtung (1) angrenzt.

15. Haltevorrichtung nach einem der vorigen Ansprüche 12 oder 13, **dadurch gekennzeichnet, dass**
eine Ringsegment-Querschnittsfläche (Am) eines inneren Ringsegments zu der Ringsegment-Querschnittsfläche (Am-1) des jeweils radial außen angrenzenden Ringsegments zunimmt, wobei Am=Y·Am-1 mit 1,1≤Y≤2,5, insbesondere 1,2≤Y≤2,0.

## Claims

1. A unit (90) of a retaining device (1) having an attached impeller anemometer (30) for use in a fan (100), wherein the retaining device (1) is formed for an anemometer (30) and for use on a fan housing (50) of the fan (100), wherein the retaining device (1) has retaining means, by means of which the anemometer (30) can be fastened to the retaining device (1), axially adjoining the flow channels (2), wherein the retaining device (1) is formed as a flow conditioner with multiple axial flow channels (2) divided into a honeycomb structure by an arrangement of bars, and the arrangement of bars is formed by radial struts (3) and circumferential struts (4).

2. A centrifugal fan (100) having a fan housing (50) having an outlet area (60), wherein the retaining device (1) is fixed to the outlet area (60) of the fan housing (50) , wherein the retaining device (1) is formed for an anemometer (30) and for use on a fan housing (50) of the fan (100), wherein the retaining device (1) has retaining means, by means of which the anemometer (30) can be fastened to the retaining device (1), axially adjoining the flow channels (2), wherein the retaining device (1) is formed as a flow conditioner with multiple axial flow channels (2) divided into a honeycomb structure by an arrangement of bars, the arrangement of bars is formed by radial struts (3) and circumferential struts (4), and the anemometer (30) is arranged on the retaining device (1) directly adjoining in the axial flow direction and attached to the retaining device (1) via the retaining means.

3. The centrifugal fan according to the preceding claim, **characterized in that** the retaining device (1) formed as a flow conditioner is arranged upstream of the anemometer (30) as seen in the axial flow direction.

4. The centrifugal fan according to any one of the preceding Claims 2 or 3, **characterized in that** the anemometer (30) is formed as a impeller anemometer having multiple impeller blades (31) arranged spaced apart in the circumferential direction, wherein the impeller blades (31) are curved in an arc shape in a circumferential direction opposite to the radial struts (3).

5. A retaining device (1) for an impeller anemometer (30), formed for use on a fan housing (50) of a fan (100), wherein the retaining device (1) has retaining means, by means of which the anemometer (30) can be fastened to the retaining device (1), axially adjoining the flow channels (2), **characterized in that** the retaining device (1) is formed as a flow conditioner with multiple axial flow channels (2) divided into a honeycomb structure by an arrangement of bars, and **in that** the arrangement of bars is formed by radial struts (3) and circumferential struts (4).

6. The retaining device according to Claim 5, **characterized in that** it has fastening means for fastening in an outlet area of the fan housing (50) of the fan (100).

7. The retaining device according to the preceding claim, **characterized in that** a first number of radial struts (3) extend from a center axis (M) of the retaining device (1) across multiple circumferential struts (4), and a further number exclusively extend between radially adjacent circumferential struts (4).

8. The retaining device according to any one of the preceding Claims 5 to 7, **characterized in that** the radial struts (3) extend curved in the shape of an arc in the circumferential direction.

9. The retaining device according to any one of the preceding Claims 6 to 8, **characterized in that** a number n of the circumferential struts (4) is determined by n=Dₐ/X, wherein X is in a value range of 20≤X≤80, in particular 35≤X≤60, Dₐ corresponds to the value in millimeters of a flow diameter (D_{S}) of the retaining device (1), and wherein n is rounded to an integer.

10. The retaining device according to any one of the preceding claims 5 to 9, **characterized in that** an axial longitudinal extension (t) of the retaining device (1) is constant in the area of the flow channels (2) over the radial extension of the retaining device (1).

11. The retaining device according to any one of the preceding claims 5 to 10, **characterized in that** the central flow channels (2) adjacent to a center axis (M) of the retaining device (1) have a greater maximum flow cross-sectional area than the flow channels (2) located further outside in the radial direction.

12. The retaining device according to any one of the preceding claims 5 to 11, **characterized in that** the circumferential struts (4) are ring-shaped closed and divide the retaining device (1) into multiple radially adjacent to each other ring segments (55, 56, 57, 58, 59).

13. The retaining device according to Claim 10 and 12, **characterized in that** the mean axial longitudinal extension (t) of the retaining device (1) is greater in the area of the flow channels (2) than a mean circumferential length (L) of the flow channels (2) in the radially outermost ring segment (59).

14. The retaining device according to the preceding claim, **characterized in that** a number of radial struts (3) in the radially outer ring segments (56, 57, 58, 59) is an integral multiple higher than in the radially innermost ring segment (55), which adjoins the central axis (M) of the retaining device (1).

15. The retaining device according to any one of the preceding Claims 12 or 13, **characterized in that** a ring segment cross-sectional area (Aₘ) of an inner ring segment increases toward the ring segment cross-sectional area (Aₘ₋₁) of the respective radially outward adjoining ring segment, wherein Aₘ=Y•Aₘ₋₁, with 1.1≤Y≤2.5, in particular 1.2≤Y≤2.0.

## Revendications

1. Unité de construction (90) composée d'un dispositif de maintien (1) avec un anémomètre à moulinet (30) fixé à celui-ci pour l'insertion dans un ventilateur (100), dans lequel le dispositif de maintien (1) est réalisé pour le anémomètre (30) et pour l'insertion au niveau d'un boîtier de ventilateur (50) du ventilateur (100), dans lequel le dispositif de maintien (1) présente des moyens de maintien, par le biais desquels l'anémomètre (30) peut être fixé axialement de manière contigüe aux canaux d'écoulement (2) au dispositif de maintien (1), dans lequel le dispositif de maintien (1) est réalisé comme redresseur d'écoulement avec plusieurs canaux d'écoulement (2) axiaux répartis par un agencement de tige dans une structure en nid d'abeilles, et l'agencement de tige est formé par des entretoises radiales (3) et des entretoises périphériques (4).

2. Ventilateur radial (100) avec un boîtier de ventilateur (50) qui présente une section de soufflage (60), dans lequel le dispositif de maintien (1) est fixé à la section de soufflage (60) du boîtier de ventilateur (50), dans lequel le dispositif de maintien (1) est réalisé pour un anémomètre (30) et pour l'insertion au niveau d'un boîtier de ventilateur (50) du ventilateur (100), dans lequel le dispositif de maintien (1) présente des moyens de maintien, par le biais desquels l'anémomètre (30) peut être fixé axialement de manière contigüe aux canaux d'écoulement (2) au dispositif de maintien (1), dans lequel le dispositif de maintien (1) est réalisé comme redresseur d'écoulement avec plusieurs canaux d'écoulement (2) axiaux répartis par un agencement de tige dans une structure en nid d'abeilles, et l'agencement de tige est formé par des entretoises radiales (3) et des entretoises périphériques (4), et l'anémomètre (30) est agencé de manière directement contiguë au dispositif de maintien (1) dans le sens d'écoulement axial et est fixé par le biais des moyens de maintien au dispositif de maintien (1).

3. Ventilateur radial selon la revendication précédente, **caractérisé en ce que** vu dans le sens d'écoulement axial, le dispositif de maintien (1) réalisé comme redresseur d'écoulement est agencé monté en amont de l'anémomètre (30).

4. Ventilateur radial selon l'une des revendications précédentes 2 ou 3, **caractérisé en ce que** l'anémomètre (30) est réalisé comme anémomètre à moulinet avec plusieurs palettes de moulinet (31) agencées à distance dans le sens périphérique, dans lequel les palettes de moulinet (31) sont courbées en arc dans un sens périphérique opposé aux tiges radiales (3).

5. Dispositif de maintien (1) pour un anémomètre à moulinet (30), réalisé pour l'insertion au niveau d'un boîtier de ventilateur (50) d'un ventilateur (100), dans lequel le dispositif de maintien (1) présente des moyens de maintien, par le biais desquels l'anémomètre (30) peut être fixé axialement de manière contigüe aux canaux d'écoulement (2) au dispositif de maintien (1), **caractérisé en ce que** le dispositif de maintien (1) est réalisé comme redresseur d'écoulement avec plusieurs canaux d'écoulement (2) axiaux répartis par un agencement de tige dans une structure en nid d'abeilles, et que l'agencement de tige est formé par des entretoises radiales (3) et des entretoises périphériques (4).

6. Dispositif de maintien selon la revendication 5, **caractérisé en ce qu'**il présente des moyens de fixation pour la fixation dans une section de soufflage du boîtier de ventilateur (50) du ventilateur (100).

7. Dispositif de maintien selon la revendication précédente, **caractérisé en ce qu'**un premier nombre des entretoises radiales (3) s'étend d'un axe médian (M) du dispositif de maintien (1) au-delà de plusieurs entretoises périphériques (4) et un autre nombre exclusivement entre des entretoises périphériques contiguës radialement (4).

8. Dispositif de maintien selon l'une des revendications précédentes 5 à 7, **caractérisé en ce que** les entretoises radiales (3) s'étendent courbées en arc dans le sens périphérique.

9. Dispositif de maintien selon l'une des revendications précédentes 6 à 8, **caractérisé en ce qu'**un nombre n des entretoises périphériques (4) est déterminé par n=Da/X, dans lequel X se trouve dans une plage de valeurs de 20≤X≤80, en particulier 35≤X≤60, Da correspond à la valeur en millimètres d'un diamètre d'écoulement (DS) du dispositif de maintien (1), et dans lequel n est arrondi à un nombre entier.

10. Dispositif de maintien selon l'une des revendications précédentes 5 à 9, **caractérisé en ce qu'**une étendue longitudinale axiale (t) du dispositif de maintien (1) est constante dans la zone des canaux d'écoulement (2) sur l'étendue radiale du dispositif de maintien (1).

11. Dispositif de maintien selon l'une des revendications précédentes 5 à 10, **caractérisé en ce que** les canaux d'écoulement (2) centraux contigus à un axe médian (M) du dispositif de maintien (1) présentent une aire de section d'écoulement maximale supérieure aux canaux d'écoulement (2) se trouvant radialement plus à l'extérieur.

12. Dispositif de maintien selon l'une des revendications précédentes 5 à 11, **caractérisé en ce que** les entretoises, périphériques (4) sont fermées en anneau et divisent le dispositif de maintien (1) en plusieurs segments annulaires (55, 56, 57, 58, 59) contigus les uns aux autres radialement.

13. Dispositif de maintien selon les revendications 10 et 12, **caractérisé en ce que** l'étendue longitudinale (t) axiale médiane du dispositif de maintien (1) dans la zone des canaux d'écoulement (2) est plus grande qu'une longueur périphérique (L) médiane des canaux d'écoulement (2) dans le segment annulaire (59) radialement le plus extérieur.

14. Dispositif de maintien selon la revendication précédente, **caractérisé en ce qu'**un nombre des entretoises radiales (3) dans les segments annulaires (56, 57, 58, 59) radialement extérieurs est supérieur d'un multiple entier à celui dans le segment annulaire (55) radialement le plus intérieur qui est contigu à l'axe médian (M) du dispositif de maintien (1).

15. Dispositif de maintien selon l'une des revendications précédentes 12 ou 13, **caractérisé en ce qu'**une aire de section de segment annulaire (Am) d'un segment annulaire intérieur augmente en l'aire de section de segment annulaire (Am-1) du segment annulaire contigu respectivement radialement à l'extérieur, dans lequel Am=Y Aₘ₋₁ avec 1,1≤Y≤2,5, en particulier 1,2≤Y≤2,0.
